# EUROPEAN PATENT SPECIFICATION

(11) **EP 4 089 239 B1**
(45) Date of publication and mention of the grant of the patent: **14.02.2024**
(21) Application number: 21172982.7
(22) Date of filing: 10.05.2021
(51) Int. Cl.: E02F 9/26, E02F 9/28

(54) **SENSOR ASSEMBLY FOR USE BETWEEN A GROUND ENGAGING TOOL AND A BUCKET**
SENSORANORDNUNG ZUR VERWENDUNG ZWISCHEN EINEM BODENBEARBEITUNGSWERKZEUG UND EINER SCHAUFEL
ENSEMBLE CAPTEUR DESTINÉ À ÊTRE UTILISÉ ENTRE UN OUTIL DE MISE EN CONTACT AVEC LE SOL ET UN GODET

(43) Date of publication of application: 16.11.2022
(73) Proprietor: Sandvik Mining and Construction Australia (Production/Supply) Pty Ltd., Milton, Queensland 4064 (AU)
(72) Inventor: KNOWLES, Bruce, Perth 6155 (AU); JAVADI, Mehrdad, Perth 6155 (AU)
(74) Representative: Sandvik

(56) References cited:
- EP-A1- 3 327 205
- EP-A1- 3 715 537
- WO-A1-2010/065990
- WO-A1-2012/107848
- WO-A1-2012/116408
- WO-A1-2014/037780
- WO-A1-2018/095536
- CN-U- 204 001 039
- US-A1- 2003 112 153
- US-A1- 2004 227 645
- US-A1- 2013 049 935
- US-A1- 2015 149 049

## Description

### Technical field

The present invention relates to monitoring of status of attachment of ground engaging tools (GETs) to heavy machinery such as a bucket of an underground loader and in particular, although not exclusively, to an electronic monitoring and communication system to prevent undesirable detachment and loss of GETs during use.

### Background

Underground mining machines operate in challenging environments and are typically subjected to significant forces and stress. Accordingly, such mining machines comprise replaceable wear parts that may be optimized for durability and are capable of being replaced when worn or damaged. For example, typically a bucket of an underground loader is fitted with a plurality of GETs in the form or interchangeable teeth secured to the front lip or edge of the bucket. Initially, the GETs were welded onto the bucket lip and on expiry of their service lifetime, removal from the lip was achieved via a time and labor intensive cutting and welding process.

More recently, mechanical connection systems have been proposed to facilitate the interchange of worn GETs as described in WO 2010/065990 and WO 2014/037780.

However, it is not uncommon for existing mechanical connections to wear prematurely or be damaged due to high impact loading forces resulting in detachment of a GET. In such situations, normal operation is halted as a manual search is often undertaken to try and locate the lost GET. Additionally, further time and effort is required to reattach or install a new GET at the heavy machinery.

A particular problem with lost and unidentified GETs is the contamination of the bulk material that is being extracted and subsequently processed (by a crusher for example). As will be appreciated, the introduction of an uncrushable GET into a crusher can cause significant danger to personnel, damage, and machine downtime. Accordingly, systems have been proposed for the detection of detached GETs to try and prevent disruption to downstream material processing. In particular, WO 2012/116408 describes a detection system for detecting loss of a GET component from a mining or earth moving machine. The system comprises an active radio frequency identification (RFID) tag securable to the GET component. One or more tag reading stations are provided at exit gates surrounding the site such that GET contaminated bulk material passing through a gate is scanned to allow GET identification and removal prior to onward processing. Further example GET detection systems are described in US 2013/0049935; US 2003/0112153; US 2015/0149049; WO 2012/107848 and CN 204001039.

However, existing GET detection systems are limited to the detection of detached GETs. In particular, a GET embedded deeply within extracted bulk material may not be readily identifiable and may pass downstream undetected. Additionally, such systems do not address the problem of the labor and time required to repair and/or reattach a lost GET at the heavy machinery. Accordingly, what is required is a GET detection/monitoring system that addresses the above problems.

EP 3 715 537 A1 discloses a capsule for protecting an electronic device including a sensor assembly inside a wear element of an earth moving machine.

WO 2018/095536 discloses a monitoring system for monitoring a status of attachment of a ground engaging tool (GET) at a mining, earth moving or rock processing machine configured to output a status of attachment of the GET at the heavy machinery in real-time (i.e., as the machinery is in use). The monitoring system is sensitive to the attachment status of a GET so as to alert personnel to the loosening or partial failure of a mechanical connection of the GET to the heavy machinery. The system aims at mitigating undesirable damage to the attachment mechanism of a GET and the unintentional GET detachment at a mining, earth moving or rock processing machine. The monitoring system comprising: at least one GET detachably mountable at a mount region of a mining, earth moving or rock processing machine; at least one proximity sensor provided at the GET and configured to sense a proximity of the GET relative to the mount region of the mining, earth moving or rock processing machine to which the GET is mountable; and a transmitter provided at the GET to transmit wirelessly proximity data to a receiver located remote from the GET.

The GET comprises an electronic tag, wherein the proximity sensor is provided at the tag. Preferably, the tag comprises any one or a combination of the following set of: a PCB; a processor; a data storage utility; a transceiver; an antenna. Optionally, the transceiver comprises a radio frequency transceiver and/or a Bluetooth transceiver.

The electronic tag is encapsulated within a housing, a shell, an encapsulating material such as a polymer based material or potting mixture so as to protect the tag from abrasive wear or impact related damage and to provide a sealed coating to prevent moisture ingress. Optionally, the polymer-based material comprises a silicone material or an epoxy adapted to seal, house and protect the electronic components from moisture in addition to bonding the tag to the GET.

The tag comprises electronic components and is bonded to the GET via an encapsulating material. In particular, the tag is encapsulated within a material that firstly acts as an adhesive to attach the tag to the forward region of a shroud (GET) cavity and secondly provides a moisture protective housing for the tag.

Hence, prior art tags may be provided already at manufacturing of the GET and thus delivered with GETs and subsequently activated by an activator to enable use of the proximity sensor.

Not all customers will activate and use the proximity sensor and thus it would be advantageous to find a solution allowing for attachment of the sensor at the work site by a customer willing to make use of the proximity sensing technology. Such installation requires appropriate tools and knowledge about how to perform a proper install. Further, tolerances at manufacturing of the GETs mean that the actual position of the proximity sensor will differ with the risk of having the sensor positioned too far out such that it is crushed between the GET and the bucket.

### Summary

A first object of the present disclosure is thus to provide for easy post-production install of a proximity sensor to a GET, i.e. at the site where the GET is to be used. A second object is to mitigate damage to the proximity sensor by crushing between the GET and the bucket. A third object is to prevent disengagement of the tag from the shroud.

These and other objects are enabled by a sensor assembly for attachment to a ground engaging tool comprising an inner case and an outer case, wherein the inner case houses a distance sensor configured to measure a gap to an adjacent surface, for example caused by wear, wherein the outer case is provided with a first cavity for receiving the inner case through an opening of the first cavity such that the inner case is movably guided in the outer case for movement into and out of the outer case along a predetermined path of movement, wherein the sensor assembly comprises a biasing means adapted to bias the inner case in a direction out of the outer case along said predetermined path of movement.

The sensor assembly is for being positioned between a ground engaging tool and a bucket to which the ground engaging tool is attached. The outer case is positioned in a first cavity formed in the ground engaging tool at casting of the ground engaging tool, said first cavity having an opening facing the leading edge portion or boss of the bucket. The outer case is glued and/or press-fitted in the first cavity of the ground engaging tool. The ground engaging tool can be sold and delivered without the inner case. The inner case can be purchased separately and is easily insertable into the first cavity of the outer case. Upon insertion of the inner case into the first cavity of the outer case, the biasing means eventually begins biasing the inner case outwards. As the ground engaging tool with the outer case and with the inner case fitted in the outer case, are mounted to the bucket, the biasing means forces the inner case against the bucket, thereby enabling a tight fit between bucket and the inner case regardless of any deviations in tolerances at casting of the ground engaging tool. If the cavity depth is out of specification, the two cases can absorb some or all of the difference such that crushing the proximity sensor between the GET and the bucket is prevented.

The biasing means may be provided at an inner bottom surface of the first cavity of the outer case for pushing against an outer bottom surface of the inner case.

Such positioning of the biasing means keeps the biasing means protected from dust and dirt and thereby improves reliability.

The biasing means may be a spring or a resilient member such as rubber or an elastomer, for example in the form of a piece of homogenous material or a piece of foam material.

The biasing means may be attached to the inner bottom surface of the outer case or may be attached to the outer bottom surface of the inner case.

By attaching the biasing means to either the inner case or to the outer case, the risk of losing or misplacing the biasing means is lower. Also, the positioning of the biasing means at assembly of the sensor assembly is made easier since the position of the biasing means is well defined.

The biasing means may be integrally formed with the inner case and extend from an outer bottom surface of the inner case for pressing against the inner bottom surface of the first cavity of the outer case.

By forming the biasing means integrally with the inner case, the number of parts are reduced and the risk of losing the biasing means at assembly is mitigated.

The inner case and the outer case may be provided with one or more pairs of corresponding male and female interlocking means configured such that when the inner case is positioned within the outer case the male interlocking means is movable within the female interlocking means upon movement of the inner case along said predetermined longitudinal axis between an inner position and an outer position, and such that the male and female interlocking means engage at the outer position to prevent the inner case from moving past the outer position further out of the outer case.

Such interlocking means keep the inner case from falling out of the outer case and thus enables easier handling of the ground engaging tool before and during attachment to the bucket and also after detachment of the ground engaging tool from the bucket such as if the ground engaging tool is lost.

The female interlocking means may be provided in the form of second cavities in inner side surfaces of the first cavity of the outer case.

The female interlocking means may be provided in the form of through hole(s) through the side walls of the outer case.

One or more outer side surfaces of the outer case may be provided with resilient protrusions.

The resilient protrusions provide a means for aligning and holding the sensor assembly in the cavity of the ground engaging tool, for example during fixation of the outer case to the ground engaging tool using an adhesive or cement.

The resilient protrusions may be shaped as elongate wings or hooks directed towards the opening-end of the outer case.

Such direction of the protrusions enable easier insertion of the outer case into the cavity of the ground engaging tool, and provide improved gripping of the ground engaging tool to mitigate movement of the outer case out of the cavity of the ground engaging tool.

An outer bottom surface of the outer case may be provided with one or more recesses or protrusions.

The provision of such recesses or protrusions increases the available surface area for adhesive/cement to attach to and thereby promotes a stronger connection between the ground engaging tool and outer case when using adhesive/cement.

The sensor may be embedded in resin in the inner case.

The resin protects the electronic sensor from moisture and foreign particles.

The inner case may be made of the resin also embedding the sensor, thereby forming one seamless body within which the sensor is embedded. Such a design is well protected from leaks and the use of one material, i.e. the resin, mitigates the risk of delamination between inner case and embedding resin.

The outer case and the inner case may be made of a thermoplastic polymer material.

Thermoplastic materials are robust and easy to manufacture.

The inner case may be provided with a central cavity for receiving the sensor, wherein the central cavity of the inner case is provided with one or more shelfs and wherein the shelf(s) and the sensor are configured such that the sensor rests against the shelf(s) in a predetermined position within the central cavity of the inner case. The shelf enables easier assembly of the sensor assembly by allowing the sensor to be inserted into the central cavity and forced against the shelf such that the sensor is given a predetermined position within the inner case. The sensor can then be fixed in place by any suitable means, such as by being molded into a resin poured into the central cavity, or by being fixed by friction snap-locks or screws.

The inner case may be provided with a plurality of locking protrusions or latches configured to hold the sensor in its installed position resting against the shelf. The locking protrusions or latches mechanically grip the sensor and prevent it from moving away from its installed position by the shelf. The locking protrusions or latches may be resilient or inherent flexibility in the sensor may be used to allow the sensor to move past the protrusion/latch at manufacturing of the sensor assembly. An advantage of the provision of the locking protrusions/latches is that the position of the sensor is fixed independently of the orientation of the sensor assembly during manufacturing, which eases handling during manufacturing.

### Brief description of drawings

Figs. 1-5 all relate to a first embodiment of a sensor assembly.
Fig. 1 shows the sensor assembly when installed in a GET attached to a bucket.
Fig. 2 shows a perspective view of the sensor assembly.
Fig. 3 shows a an exploded view in perspective of the sensor assembly.
Fig. 4 shows a side view of the sensor assembly with the inner case pushed fully into the outer case, i.e. with the inner case in its inner position.
Fig. 5 shows a side view of the sensor assembly with the inner case pushed away from the inner position until to its outer allowed position relative to the outer case, i.e. with the inner case in its outer position.

| | | | |
|---|---|---|---|
| 1 | sensor assembly | 13 | female interlocking means |
| 2 | ground engaging tool | 14 | resilient protrusions on outer side surfaces of outer case |
| 3 | inner case | 15 | outer bottom surface of the outer case |
| 4 | outer case | 16 | recesses or protrusions |
| 5 | sensor (distance sensor) | 17 | shelf |
| 6 | gap | 18 | locking protrusion or latch |
| 7 | first cavity of outer case | P1 | inner position |
| 8 | predetermined path of movement | P2 | outer position |
| 9 | biasing means | | |
| 10 | inner bottom surface of the outer case | | |
| 11 | outer bottom surface of the inner case | | |
| 12 | male interlocking means | | |

### Detailed description

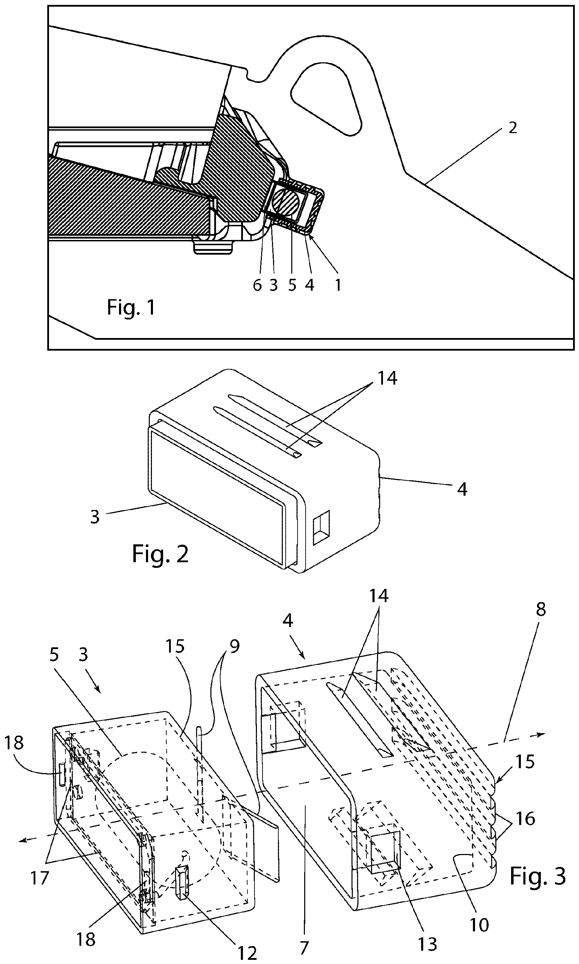

A sensor assembly 1 according a first embodiment will hereinafter be described with reference to the appended drawings. As shown in fig. 1, the sensor assembly 1 if for attachment to a ground engaging tool 2 (GET). The sensor assembly comprises an inner case 3 and an outer case 4. The inner case 3 houses a sensor 5 configured to measure a gap 6 to an adjacent surface which is a surface of the bucket to which the GET is attached in use. The outer case 4 is provided with a first cavity 7 for receiving the inner case 3 through an opening of the first cavity 7 such that the inner case 3 is movably guided in the outer case 4 for movement into and out of the outer case 4 along a predetermined path of movement 8. The sensor assembly 1 comprises a biasing means 9 adapted to bias the inner case 3 out of the outer case 4 along said predetermined path of movement 8.

The biasing means 9 is provided at an inner bottom surface 10 of the first cavity 7 of the outer case 4 for pushing against an outer bottom surface 11 of the inner case 3.

As shown in fig. 3, the biasing means 9 is integrally formed with the inner case 3 and extends from the outer bottom surface 11 of the inner case 3 for pressing against the inner bottom surface 10 of the first cavity 7 of the outer case 4. In this embodiment, the biasing means has the form of a pair of legs extending obliquely away from the outer bottom surface of the inner case. However, in other embodiments, the any other number of legs could alternatively be provided instead. Alternatively, the biasing means could be one or more legs integrally formed with the outer case 4 for pressing against the outer bottom surface 11 of the inner case 3. Alternatively, the biasing means could be a separate member positioned between the inner case 3 and the outer case 4, optionally attached to either one of them or to both. The separate member could be any suitable member, such as a spring or a piece of resilient material such as rubber or an elastomer, for example in the form of a piece of homogenous material or a piece of foam material.

As shown in figs. 3-5, the inner case 3 and the outer case 4 are provided with two pairs of corresponding male 12 and female 13 interlocking means configured such that when the inner case 3 is positioned within the outer case 4 the male interlocking means 12 is movable within the female interlocking means 13 upon movement of the inner case 3 along said predetermined longitudinal axis 8 between an inner position P1 and an outer position P2, and such that the male 12 and female 13 interlocking means engage at the outer position P2 to prevent the inner case 3 from moving past the outer position P2 further out of the outer case 4. Also, the female interlocking means 13 are provided in the form of through holes through the side walls of the outer case 4. Alternatively, the female interlocking means could in other embodiments be provided in the form of second cavities in inner side surfaces of the first cavity 7 of the outer case 4.

Outer side surfaces of the outer case 4 are provided with protrusions 14 integrally formed with the outer case 4. Depending on the choice of material of the outer case 4, the protrusions may be more or less resilient but generally they are shaped thin enough and from a resilient enough material so as to provide for some resiliency.

In this embodiment, the resilient protrusions 14 are shaped as elongate wings or hooks directed towards the opening-end of the outer case 4 but in other embodiments any other suitable shape may be provided instead.

An outer bottom surface 15 of the outer case 4 is provided with one or more recesses/protrusions 16 increasing the available surface area for adhesive/cement to attach to and thereby promotes a stronger connection between the ground engaging tool and outer case when using adhesive/cement.

The sensor is embedded in resin in the inner case 3 but in other embodiments, the resin may alternatively be omitted.

In this embodiment, the outer case 4 and the inner case 3 are both made of a thermoplastic material. However, in other embodiments, any other suitable material could be used instead. In some embodiments, the inner case 3 could be made of the resin also embedding the sensor, i.e. molded directly onto the sensor.

The inner case 3 is provided with a central cavity for receiving the sensor 5 and the central cavity is provided with a shelf 17. In other embodiments, the shelf could alternatively be omitted. The shelf 17 and the sensor 5 are configured such that the sensor 5 in its installed position within the inner case rests against the shelf 17 in a predetermined position within the central cavity of the inner case 3.

The inner case 7 is provided with a plurality of locking protrusions or latches 18 configured to hold the sensor 5 in its installed position resting against the shelf 17. The locking protrusions or latches 18 may be resilient or inherent flexibility in the sensor 5 may be used to allow the sensor 5 to move past the protrusion/latch 18 at manufacturing of the sensor assembly 1. In other embodiments, these locking protrusions or latches 18 may alternatively be provided in the form of recesses in the wall of the cavity of the inner case 3, and corresponding protrusions provided on the sensor 5 for engaging the recesses once the sensor 5 reaches its installed position resting against the shelf 17 at manufacturing of the sensor assembly 1. Alternatively, the locking protrusions or latches 18 may be omitted.

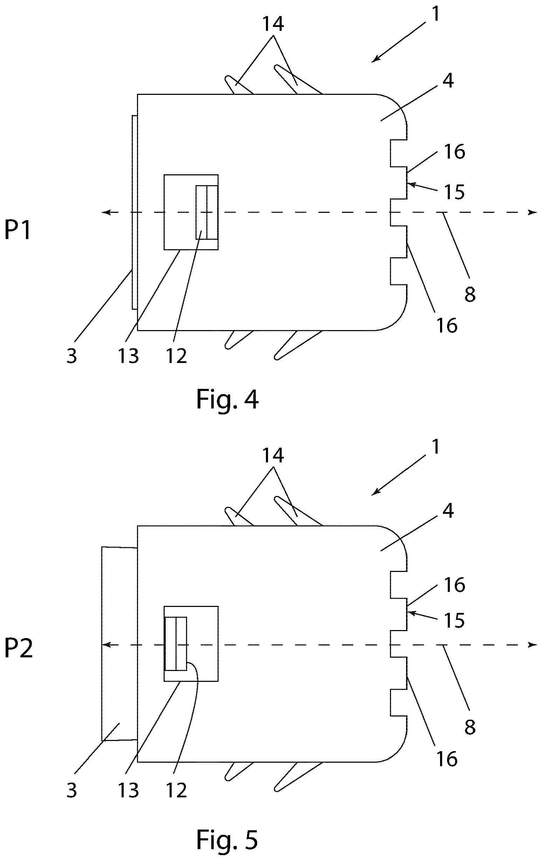

In use, the sensor assembly 1 is mounted to a GET 2 and wirelessly connected to a monitoring system which monitors readings from the sensor 5 to detect abnormal distances between the GET 2 and the bucket. As the GET 2 is attached to the bucket, the inner case is free to move slightly relative to the outer case and thereby relative to the GET 2 if to absorb manufacturing tolerances of the GET 2 and the bucket. If the GET 2 starts to loosen from the bucket, the inner case 3 first moves slightly outwards along the predetermined path of movement 8 until it reaches its outer position P2 shown in fig. 5. Any further movement of the GET 2 away from the bucket will result in a greater distance reading from the distance sensor 5, indicating that the GET 2 is starting to get loosely attached to the bucket, wherein appropriate measures can be taken by personnel to prevent the GET 2 from getting lost. Hence, the sensor assembly 1 provides a certain amount of float to the sensor thereby preventing it to be crushed. Also, the GETs 2 may optionally be delivered without a sensor attached wherein the customer can choose to install the sensor on-site by simply inserting the inner case 3 into the outer case 4 already mounted to the GET 2. Alternatively, also the GET 2 is delivered without the outer case 4 installed, wherein the customer can install the sensor assembly 1 on-site by cementing the outer case 4 into the cavity of the GET 2 and then insert the inner case 3. If the sensor 5 is deactivated at delivery, it can be activated on-site using wireless communication with the monitoring system or an activation system.

## Claims

1. A sensor assembly (1) for attachment to a ground engaging tool (2), wherein the sensor assembly comprises an inner case (3) and an outer case (4), wherein the inner case (3) houses a sensor (5) configured to measure a gap (6) to an adjacent surface, wherein the outer case (4) is provided with a first cavity (7) for receiving the inner case (3) through an opening of the first cavity (7) such that the inner case (3) is movably guided in the outer case (4) for movement into and out of the outer case (4) along a predetermined path of movement (8), and wherein the sensor assembly (1) comprises a biasing means (9) adapted to bias the inner case (3) out of the outer case (4) along said predetermined path of movement (8).

2. A sensor assembly (1) according to claim 1, wherein the biasing means (9) is provided at an inner bottom surface (10) of the first cavity (7) of the outer case (4) for pushing against an outer bottom surface (11) of the inner case (3).

3. A sensor assembly (1) according to claim 2, wherein the biasing means (9) is a spring or a piece of resilient material such as rubber or an elastomer.

4. A sensor assembly (1) according to any one of claims 2-3, wherein the biasing means is attached to the inner bottom surface (10) of the outer case or attached to the outer bottom surface (11) of the inner case.

5. A sensor assembly (1) according to any one of claims 2-3, wherein the biasing means (9) is integrally formed with the inner case (3) and extends from the outer bottom surface (11) of the inner case (3) for pressing against the inner bottom surface (10) of the first cavity (7) of the outer case (4).

6. A sensor assembly (1) according to any one of claims 1-5, wherein the inner case (3) and the outer case (4) are provided with one or more pairs of corresponding male ( 12) and female (13) interlocking means configured such that when the inner case (3) is positioned within the outer case (4) the male interlocking means (12) is movable within the female interlocking means (13) upon movement of the inner case (3) along said predetermined longitudinal axis (8) between an inner position (P1) and an outer position (P2), and such that the male (12) and female (13) interlocking means engage at the outer position (P2) to prevent the inner case (3) from moving past the outer position (P2) further out of the outer case (4).

7. A sensor assembly (1) according to claim 6, wherein the female interlocking means (13) is/are provided in the form of second cavities in inner side surfaces of the first cavity (7) of the outer case (4).

8. A sensor assembly (1) according to claim 6, wherein the female interlocking means (13) is/are provided in the form of through hole(s) through the side walls of the outer case (4).

9. A sensor assembly (1) according to any one of claims 1-8, wherein one or more outer side surfaces of the outer case (4) are provided with resilient protrusions (14).

10. A sensor assembly (1) according to claim 9, wherein the resilient protrusions (14) are shaped as elongate wings or hooks directed towards the opening-end of the outer case (4).

11. A sensor assembly (1) according to claim 9, wherein an outer bottom surface (15) of the outer case (4) is provided with one or more recesses/protrusions (16).

12. A sensor assembly (1) according to any one of claims 1-11, wherein the sensor is embedded in resin in the inner case (3).

13. A sensor assembly (1) according to claim 12, wherein the inner case (3) is made of the resin also embedding the sensor.

14. A sensor assembly (1) according to any one of claims 1-14, wherein the inner case (3) is provided with a central cavity for receiving the sensor (5), wherein the central cavity of the inner case (3) is provided with a shelf (17) and wherein the shelf (17) and the sensor (5) are configured such that the sensor (5) in its installed position within the inner case rests against the shelf (17) in a predetermined position within the central cavity of the inner case (3).

15. A sensor assembly (1) according to claim 14, wherein the inner case (7) is provided with a plurality of locking protrusions or latches (18) configured to hold the sensor (5) in its installed position resting against the shelf (17).

## Patentansprüche

1. Sensoranordnung (1) zur Anbringung an einem Bodenbearbeitungswerkzeug (GET) (2), wobei die Sensoranordnung ein inneres Gehäuse (3) und ein äußeres Gehäuse (4) aufweist, wobei das innere Gehäuse (3) einen Sensor (5) aufweist, der so eingerichtet ist, dass er einen Spalt (6) zu einer angrenzenden Oberfläche misst, wobei das äußere Gehäuse (4) einen ersten Hohlraum (7) zur Aufnahme des inneren Gehäuses (3) durch eine Öffnung des ersten Hohlraums (7) aufweist, so dass das innere Gehäuse (3) in dem äußeren Gehäuse (4) beweglich geführt ist, zur Bewegung in das äußere Gehäuse (4) hinein und aus diesem heraus entlang eines vorbestimmten Bewegungswegs (8), und wobei die Sensoranordnung (1) ein Vorspannmittel (9) enthält, das geeignet ist, das innere Gehäuse (3) aus dem äußeren Gehäuse (4) heraus entlang des vorbestimmten Bewegungswegs (8) vorzuspannen.

2. Sensoranordnung (1) nach Anspruch 1, wobei das Vorspannmittel (9) an einer inneren Bodenfläche (10) des ersten Hohlraums (7) des äußeren Gehäuses (4) vorgesehen ist, um gegen eine äußere Bodenfläche (11) des inneren Gehäuses (3) zu drücken.

3. Sensoranordnung (1) nach Anspruch 2, wobei das Vorspannmittel (9) eine Feder oder ein Stück aus elastischem Material wie Gummi oder ein Elastomer ist.

4. Sensoranordnung (1) nach einem der Ansprüche 2 bis 3, wobei das Vorspannmittel an der inneren Bodenfläche (10) des äußeren Gehäuses angebracht ist oder an der äußeren Bodenfläche (11) des inneren Gehäuses angebracht ist.

5. Sensoranordnung (1) nach einem der Ansprüche 2-3, wobei das Vorspannmittel (9) einstückig mit dem inneren Gehäuse (3) ausgebildet ist und sich von der äußeren Bodenfläche (11) des inneren Gehäuses (3) erstreckt, um gegen die innere Bodenfläche (10) des ersten Hohlraums (7) des äußeren Gehäuses (4) zu drücken.

6. Sensoranordnung (1) nach einem der Ansprüche 1 bis 5, wobei das innere Gehäuse (3) und das äußere Gehäuse (4) mit einem oder mehreren Paaren von entsprechenden männlichen (12) und weiblichen (13) Verriegelungsmitteln ausgestattet sind, die so eingerichtet sind, dass, wenn das innere Gehäuse (3) in dem äußeren Gehäuse (4) positioniert ist, das männliche Verriegelungsmittel (12) innerhalb des weiblichen Verriegelungsmittels (13) bei Bewegung des inneren Gehäuses (3) entlang der vorbestimmten Längsachse (8) zwischen einer inneren Position (P1) und einer äußeren Position (P2) beweglich ist, und so, dass die männlichen (12) und weiblichen (13) Verriegelungsmittel in der äußeren Position (P2) ineinander greifen, um zu verhindern, dass sich das innere Gehäuse (3) über die äußere Position (P2) hinaus weiter aus dem äußeren Gehäuse (4) bewegt.

7. Sensoranordnung (1) nach Anspruch 6, wobei die weiblichen Verriegelungsmittel (13) in Form von zweiten Ausnehmungen in inneren seitlichen Flächen der ersten Ausnehmung (7) des äußeren Gehäuses (4) vorgesehen ist/sind.

8. Sensoranordnung (1) nach Anspruch 6, wobei die weiblichen Verriegelungsmittel (13) in Form von Durchgangslöchern durch die Seitenwände des Außengehäuses (4) vorgesehen ist/sind.

9. Sensoranordnung (1) nach einem der Ansprüche 1 bis 8, wobei eine oder mehrere äu-ßere seitliche Flächen des Außengehäuses (4) mit federnden Vorsprüngen (14) vorgesehen sind.

10. Sensoranordnung (1) nach Anspruch 9, wobei die federnden Vorsprünge (14) als längliche Flügel oder Haken geformt sind, die zum Öffnungsende des Außengehäuses (4) hin geleitet sind.

11. Sensoranordnung (1) nach Anspruch 9, wobei eine äußere Unterseite (15) des Außengehäuses (4) mit einer oder mehreren Ausnehmungen/Vorsprüngen (16) versehen ist.

12. Sensoranordnung (1) nach einem derAnsprüche 1 bis 11, wobei der Sensor in dem inneren Gehäuse (3) in Harz eingebettet ist.

13. Sensoranordnung (1) nach Anspruch 12, wobei das Innengehäuse (3) aus dem Harz hergestellt ist, in das auch der Sensor eingebettet ist.

14. Sensoranordnung (1) nach einem der Ansprüche 1 bis 14, wobei das Innengehäuse (3) mit einem zentralen Hohlraum zur Aufnahme des Sensors (5) vorgesehen ist, wobei der zentrale Hohlraum des Innengehäuses (3) mit einer Ablage (17) versehen ist und wobei die Ablage (17) und der Sensor (5) so eingerichtet sind, dass der Sensor (5) in seiner installierten Position innerhalb des Innengehäuses an der Ablage (17) in einer vorbestimmten Position innerhalb des zentralen Hohlraums des Innengehäuses (3) ruht.

15. Sensoranordnung (1) nach Anspruch 14, wobei das Innengehäuse (7) mit einer Vielzahl von Verriegelungsvorsprüngen oder Verriegelungen (18) vorgesehen ist, die so eingerichtet sind, dass sie den Sensor (5) in seiner Einbauposition halten, in der er an der Ablage (17) anliegt.

## Revendications

1. Ensemble de capteur (1) destiné à être fixé sur un outil de terrassement (2), où l'ensemble de capteur comprend un boîtier intérieur (3) et un boîtier extérieur (4), où le boîtier intérieur (3) héberge un capteur (5) configuré pour mesurer un espace (6) par rapport à une surface adjacente, où le boîtier extérieur (4) est doté d'une première cavité (7) destinée à recevoir le boîtier intérieur (3) par une ouverture de la première cavité (7) de telle sorte que le boîtier intérieur (3) est guidé de manière mobile dans le boîtier extérieur (4) pour un déplacement dans et hors du boîtier extérieur (4) le long d'un trajet de déplacement prédéterminé (8), et où l'ensemble de capteur (1) comprend un moyen de sollicitation (9) conçu pour pousser le boîtier intérieur (3) hors du boîtier extérieur (4) le long dudit trajet de déplacement prédéterminé (8).

2. Ensemble de capteur (1) selon la revendication 1, dans lequel le moyen de sollicitation (9) est prévu au niveau d'une surface de fond intérieure (10) de la première cavité (7) du boîtier extérieur (4) afin de pousser contre une surface de fond extérieure (11) du boîtier intérieur (3).

3. Ensemble de capteur (1) selon la revendication 2, dans lequel le moyen de sollicitation (9) est un ressort ou un morceau de matériau résilient tel que le caoutchouc ou un élastomère.

4. Ensemble de capteur (1) selon l'une quelconque des revendications 2 et 3, dans lequel le moyen de sollicitation est fixé sur la surface de fond intérieure (10) du boîtier extérieur ou fixé sur la surface de fond extérieure (11) du boîtier intérieur.

5. Ensemble de capteur (1) selon l'une quelconque des revendications 2 et 3, dans lequel le moyen de sollicitation (9) est formé de manière solidaire avec le boîtier intérieur (3) et s'étend depuis la surface de fond extérieure (11) du boîtier intérieur (3) afin d'appuyer contre la surface de fond intérieure (10) de la première cavité (7) du boîtier extérieur (4).

6. Ensemble de capteur (1) selon l'une quelconque des revendications 1 à 5, dans lequel le boîtier intérieur (3) et le boîtier extérieur (4) sont dotés d'une ou de plusieurs paires de moyens d'interverrouillage mâle (12) et femelle (13) configurés de telle sorte que lorsque le boîtier intérieur (3) est positionné à l'intérieur du boîtier extérieur (4), le moyen d'interverrouillage mâle (12) peut être déplacé à l'intérieur du moyen d'interverrouillage femelle (13) lors du déplacement du boîtier intérieur (3) le long dudit axe longitudinal prédéterminé (8) entre une position intérieure (P1) et une position extérieure (P2), et de telle sorte que les moyens d'interverrouillage mâle (12) et femelle (13) s'engagent au niveau de la position extérieure (P2) pour empêcher le boîtier intérieur (3) de se déplacer au-delà de la position extérieure (P2) davantage hors du boîtier extérieur (4).

7. Ensemble de capteur (1) selon la revendication 6, dans lequel le(s) moyen(s) d'interverrouillage femelle(s) (13) est (sont) prévu(s) sous la forme de seconde(s) cavité(s) dans des surfaces latérales intérieures de la première cavité (7) du boîtier extérieur (4).

8. Ensemble de capteur (1) selon la revendication 6, dans lequel le(s) moyen(s) d'interverrouillage femelle(s) (13) est (sont) prévu(s) sous la forme de trou(s) traversant(s) à travers les parois latérales du boîtier extérieur (4).

9. Ensemble de capteur (1) selon l'une quelconque des revendications 1 à 8, dans lequel une ou plusieurs surfaces latérales extérieures du boîtier extérieur (4) sont dotées de protubérances résilientes (14).

10. Ensemble de capteur (1) selon la revendication 9, dans lequel les protubérances résilientes (14) sont façonnées sous la forme d'ailettes allongées ou de crochets orientés vers l'extrémité d'ouverture du boîtier extérieur (4).

11. Ensemble de capteur (1) selon la revendication 9, dans lequel une surface de fond extérieure (15) du boîtier extérieur (4) est dotée d'un ou de plusieurs évidements/protubérances (16).

12. Ensemble de capteur (1) selon l'une quelconque des revendications 1 à 11, dans lequel le capteur est intégré dans une résine dans le boîtier intérieur (3).

13. Ensemble de capteur (1) selon la revendication 12, dans lequel le boîtier intérieur (3) est constitué de la résine intégrant également le capteur.

14. Ensemble de capteur (1) selon l'une quelconque des revendications 1 à 14, dans lequel le boîtier intérieur (3) est doté d'une cavité centrale destinée à recevoir le capteur (5), où la cavité centrale du boîtier intérieur (3) est dotée d'une tablette (17) et où la tablette (17) et le capteur (5) sont configurés de telle sorte que le capteur (5) dans sa position installée à l'intérieur du boîtier intérieur repose contre la tablette (17) dans une position prédéterminée à l'intérieur de la cavité centrale du boîtier intérieur (3).

15. Ensemble de capteur (1) selon la revendication 14, dans lequel le boîtier intérieur (7) est doté d'une pluralité de protubérances ou de taquets de blocage (18) configurés pour maintenir le capteur (5) dans sa position installée contre la tablette (17).
